# EUROPÄISCHE PATENTSCHRIFT

(11) **EP 3 194 249 B1**
(45) Veröffentlichungstag und Bekanntmachung des Hinweises auf die Patenterteilung: **14.08.2019**
(21) Anmeldenummer: 15766128.1
(22) Anmeldetag: 15.09.2015
(51) Int. Cl.: B62D 15/02

(54) **SAS MIT SPIELFREIEM ANTRIEB**
SAS HAVING A PLAY-FREE DRIVE
CAPTEUR D'ANGLE DE BRAQUAGE DOTÉ D'UN ENTRAÎNEMENT SANS JEU

(30) Priorität: 17.09.2014 DE 102014218717
(43) Veröffentlichungstag der Anmeldung: 26.07.2017
(73) Patentinhaber: Continental Teves AG & Co. OHG, 60488 Frankfurt am Main (DE)
(72) Erfinder: GOLL, Manfred, 63695 Glauburg (DE); KROHN, Thomas, 65824 Schwalbach (DE)
(86) Internationale Anmeldenummer: PCT/EP2015/071113
(87) Internationale Veröffentlichungsnummer: WO 2016/041975

(56) Entgegenhaltungen:
- EP-A1- 1 132 716
- WO-A1-2010/070014
- DE-A1-102010 052 949
- DE-A1-102012 109 787

## Beschreibung

Die Erfindung betrifft einen Sensor zur Erfassung eines Drehwinkels einer Welle in einem Fahrzeug.

Aus der DE 198 34 322 A1 ist ein Sensor zur Erfassung eines Drehwinkels einer Welle in einem Fahrzeug, ein sogenannter Lenkwinkelsensor bekannt. Der Lenkwinkelsensor wird auch, abgekürzt für Stearing Angle Sensor, SAS genannt und umfasst ein Getriebe von der Welle angetriebenes Getriebe. Das Getriebe wiederum enthält ein mit der Welle fest verbundenes Antriebselement in Form eines Zahnrades und ein durch das Antriebselement angetriebenes Abtriebselement, ebenfalls in Form eines Zahnrades. Das Abtriebselement dient als Geberelement bei der Erfassung des Drehwinkels.

Aus der DE 10 2010 052 949 A1 ist ebenfalls ein Sensor zur Drehwinkelerfassung mit einem von einer Welle angetriebenen Getriebe bekannt.

Auch aus der WO 2010/070014 A1 ist ein Sensor zur Drehwinkelerfassung bekannt. Aus der EP1132716 A1 ist ein Sensor nach dem Oberbegriff des Anspruchs 1 bekannt.

Es ist Aufgabe der vorliegenden Erfindung den bekannten Lenkwinkelsensor zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst ein Sensor zum Erfassen eines Drehwinkels einer Welle in einem Fahrzeug ein Getriebe mit einem ortsfest an der Welle positionierbaren Antriebselement und einem Abtriebselement, an dem ortsfest ein Geberelement zum Abgeben eines vom Drehwinkel abhängigen Geberfeldes angeordnet ist, wobei das Antriebselement und das Abtriebselement elastisch gegeneinander verspannt sind.

Dem angegebenen Sensor liegt die Überlegung zugrunde, dass das Getriebe in dem eingangs genannten Lenkwinkelsensor ein Spiel aufweist, das allein schon bedingt durch Wärmebewegungen des Antriebselementes und des Abtriebselementes auftritt. Aufgrund dieses Spiels kann die Erfassung des Lenkwinkels mit Toleranzen behaftet sein, die insbesondere bei Richtungsänderungen beim Lenken auftreten, weil das Antriebselement und das Abtriebselement des Getriebes bei diesen Richtungsänderungen zunächst dieses Spiel überwinden müssen. Das bringt Hystereseeffekte in die Messung des Lenkwinkels ein, die für die Verarbeitung des Lenkwinkels beispielsweise im Rahmen einer Fahrdynamikregelung nicht hinnehmbar sind.

Hier greift der angegebene Sensor mit dem Vorschlag an, das Antriebselement und das Abtriebselement gegeneinander elastisch zu verspannen. Auf diese Weise können die zuvor genannten Wärmebewegungen einerseits ausgeglichen werden, andererseits aber wird sichergestellt, dass das Antriebselement und das Abtriebselement immer eng aneinanderliegen, so dass das zuvor genannte Spiel unterbunden wird.

Das Prinzip ist nicht nur an einem Lenkwinkelsensor sondern an jedem beliebigen Sensor anwendbar, der einen Drehwinkel einer Welle messen soll.

Prinzipiell können die beiden Teile des Getriebes rein durch ihre Lage und durch ihre Materialwahl bedingt gegeneinander elastisch verspannt werden. In einer Weiterbildung des angegebenen Sensors sind das Antriebselement und das Abtriebselement jedoch über ein Klammerelement gegeneinander elastisch verspannt.

Erfindungsgemäß ist das Abtriebselement am Klammerelement gelagert, wobei das Klammerelement das Antriebselement umgreift. Weil das Abtriebselement am Klammerelement gelagert ist, wird es durch das Umgreifen des Antriebselementes durch das Klammerelement gegen das Antriebselement gedrückt. Auf diese Weise wird das oben genannte Spiel vermieden aber aufgrund der Elastizität dennoch eine Bewegung zwischen den beiden Teilen des Getriebes zugelassen.

Erfindungsgemäß weist das Klammerelement zwei das Antriebselement umgreifende Schenkel auf, die an Ihren Enden wenigstens zum Antriebselement hin verdickt ausgebildet sind. Auf diese Weise wird das Abtriebselement am Antriebselement über eine stabile Dreipunktlagerung angelegt, wobei die beiden Schenkel des Klammerelementes zwei der Punkte und das am Klammerelement gelagerte Abtriebselement den dritten Punkt der Dreipunktlagerung bilden.

In einer anderen Weiterbildung des angegebenen Sensors umfasst das Klammerelement ein Gehäuse, in dem das Abtriebselement aufgenommen ist. Auf diese Weise ist das Abtriebselement geschützt und kann beispielsweise mit empfindlichen Bauteilen, wie einem Gebermagneten ausgestattet werden.

Um das Abtriebselement am Klammerelement in der oben genannten Weise zu lagern kann es mit dem Gehäuse über ein Klemmelement verbunden sein. Alternativ könnte es auch direkt in dem Gehäuse gelagert werden.

In einer zusätzlichen Weiterbildung des angegebenen Sensors weist das Klemmelement einen das Abtriebselement lagernden Lagerabschnitt und zwei vom Lagerabschnitt abragende Befestigungsabschnitte auf, über den der Lagerabschnitt am Gehäuse befestigt ist. Dabei können die Befestigungsabschnitte achsensymmetrisch zu einer durch den Lagerabschnitt verlaufenden Achse angeordnet sein.

In einer weiteren Weiterbildung des angegebenen Sensors können die Lagerabschnitte formschlüssig mit dem Gehäuse verbunden sein.

In einer besonderen Weiterbildung des angegebenen Sensors kann das Abtriebselement zusätzlich zum Lagerabschnitt am Gehäuse gelagert sein.

Gemäß einem weiteren Aspekt der Erfindung umfasst ein Fahrzeug ein Chassis, wenigstens ein das Chassis tragendes Rad, das gegenüber dem Chassis mittels einer Lenkwelle einschlagbar ist und einen der angegebenen Sensoren zum Erfassen eines vom Einschlagwinkel des Rades abhängigen Drehwinkel der Lenkwelle. Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine Prinzipdarstellung eines Fahrzeuges,
Fig. 2 eine Prinzipdarstellung eines Lenksystems für das Fahrzeug der Fig. 1,
Fig. 3 eine Prinzipdarstellung eines Sensorsystems zur Erfassung eines Lenkwinkels in dem Lenksystem der Fig. 2,
Fig. 4a eine perspektivische Ansicht eines Schaltkreises für den Lenkwinkelsensor in dem Sensorsystem der Fig. 3,
Fig. 4b eine perspektivische Ansicht eines Sensorelementes für den Lenkwinkelsensor zur Kontaktierung mit dem Schaltkreis der Fig. 4a,
Fig. 5a eine perspektivische Ansicht eines Gehäuses mit einem Klammerelement zum Einhausen des Schaltkreises der Fig. 4a,
Fig. 5b eine perspektivische Ansicht eines Deckels für das Gehäuse der Fig. 4a,
Fig. 6a eine perspektivische Ansicht eines Klemmelementes zur Lagerung eines Abtriebselementes des Lenkwinkelsensors in dem Gehäuse der Fig. 4a.
Fig. 6b eine perspektivische Ansicht eines im Klemmelement lagerbaren Abtriebselementes,
Fig. 6c eine perspektivische Ansicht eines Klemmelement mit einem darin gelagerten Abtriebselement,
Fig. 6d eine perspektivische Ansicht eines Flussleitelementes zur Aufnahme am Gehäuse der Fig. 4a,
Fig. 7 eine perspektivische Ansicht eines Messaufnehmers des Sensorsystems zur Erfassung des Lenkwinkels und des Drehmoments in dem Lenksystem der Fig. 2,

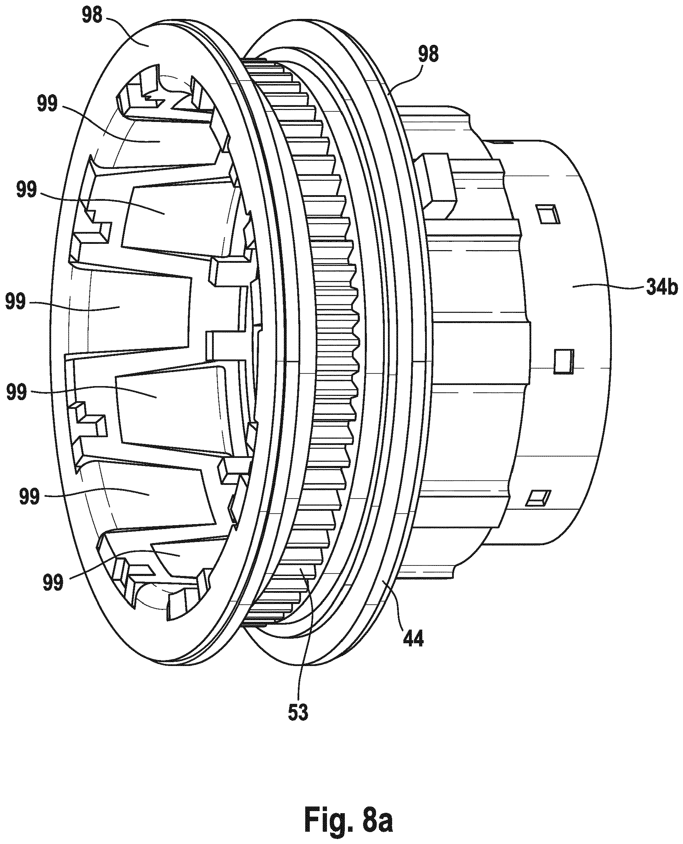

Fig. 8a eine perspektivische Ansicht eines Antriebselementes für das Abtriebselement der Fig. 6b,

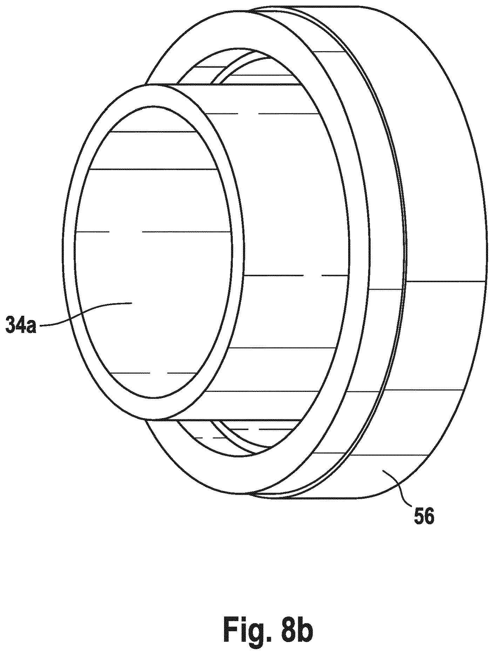

Fig. 8b eine perspektivische Ansicht eines Geberelementes für den Lenkwinkelsensor und den Drehmomentsensor der Fig. 7,

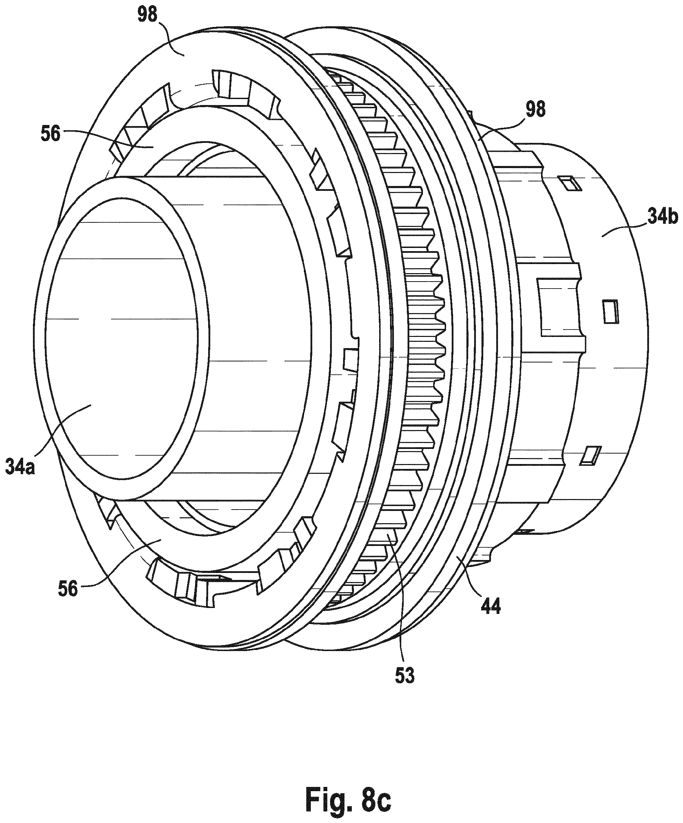

Fig. 8c eine perspektivische Ansicht des Antriebselementes der Fig. 8a und des Geberelementes der Fig. 8b in einem zusammengesetzten Zustand,
Fig. 9a eine perspektivische Ansicht eines auf das Antriebselement der Fig. 8a aufgesetzten Messaufnehmers der Fig. 7, und
Fig. 9b eine perspektivische Ansicht des vollständigen Sensorsystems zeigen.

In den Figuren werden gleiche technische Elemente mit gleichen Bezugszeichen versehen und nur einmal beschrieben.

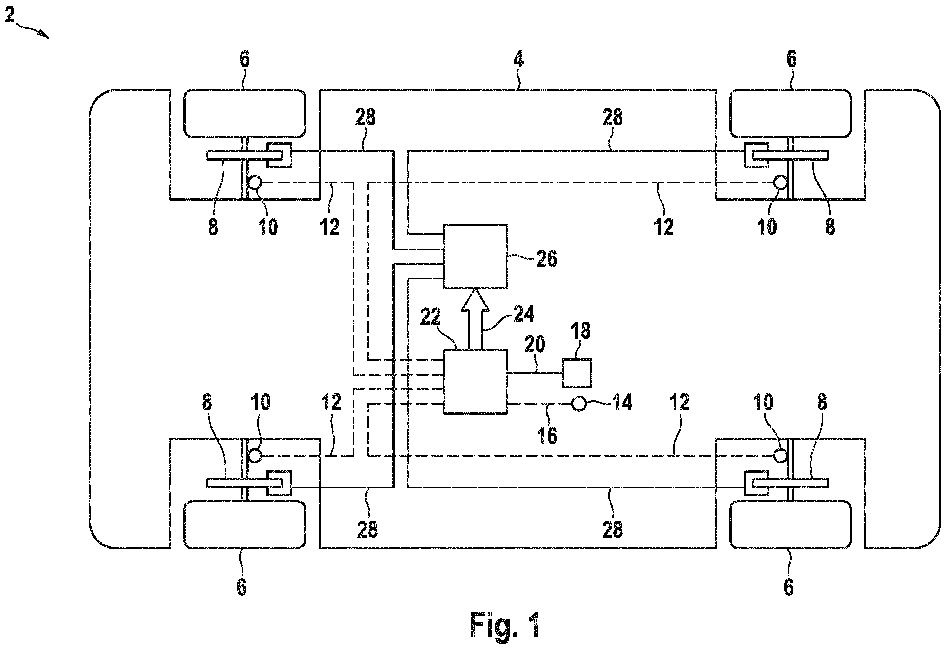

Es wird auf Fig. 1 Bezug genommen, die eine schematische Ansicht eines Fahrzeuges 2 mit einer an sich bekannten Fahrdynamikregelung zeigt. Details zu dieser Fahrdynamikregelung können beispielsweise der DE 10 2011 080 789 A1 entnommen werden.

Das Fahrzeug 2 umfasst ein Chassis 4 und vier Räder 6. Jedes Rad 6 kann über eine ortsfest am Chassis 4 befestigte Bremse 8 gegenüber dem Chassis 4 verlangsamt werden, um eine Bewegung des Fahrzeuges 2 auf einer nicht weiter dargestellten Straße zu verlangsamen.

Dabei kann es in einer dem Fachmann bekannten Weise passieren, dass das die Räder 6 des Fahrzeugs 2 ihre Bodenhaftung verlieren und sich das Fahrzeug 2 sogar von einer beispielsweise über ein nicht weiter gezeigtes Lenkrad vorgegebenen Trajektorie durch Untersteuern oder Übersteuern wegbewegt. Dies wird durch an sich bekannte Regelkreise wie ABS (Antiblockiersystem) und ESP (elektronisches Stabilitätsprogramm) vermieden.

In der vorliegenden Ausführung weist das Fahrzeug 2 dafür Drehzahlsensoren 10 an den Rädern 6 auf, die eine Drehzahl 12 der Räder 6 erfassen. Ferner weist das Fahrzeug 2 einen Inertialsensor 14 auf, der nachstehend Fahrdynamikdaten 16 genannte Inertialdaten des Fahrzeuges 2 erfasst die beispielsweise eine Nickrate, eine Wankrate, eine Gierrate, eine Querbeschleunigung, eine Längsbeschleunigung und/oder eine Vertikalbeschleunigung des Fahrzeuges 2 umfassen können. Schließlich weist das Fahrzeug einen Lenkwinkelsensor 18 auf, der einen vom Fahrer vorgegebenen Lenkwinkel 20 erfasst. Der Lenkwinkelsensor 18 kann auch als SAS für Steering Angle Sensor bezeichnet werden.

Basierend auf den erfassten Drehzahlen 12, den Fahrdynamikdaten 16 und dem Lenkwinkel 20 kann ein Regler 22 in einer dem Fachmann bekannten Weise bestimmen, ob das Fahrzeug 2 auf der Fahrbahn rutscht oder sogar von der oben genannten vorgegebenen Trajektorie abweicht und entsprechen mit einem an sich bekannten Reglerausgangssignal 24 darauf reagieren. Das Reglerausgangssignal 24 kann dann von einer Stelleinrichtung 26 verwendet werden, um mittels Stellsignalen 28 Stellglieder, wie die Bremsen 8 anzusteuern, die auf das Rutschen und die Abweichung von der vorgegebenen Trajektorie in an sich bekannter Weise reagieren.

Der Regler 22 kann beispielsweise in eine an sich bekannte Motorsteuerung des Fahrzeuges 2 integriert sein. Auch können der Regler 22 und die Stelleinrichtung 26 als eine gemeinsame Regeleinrichtung ausgebildet und optional in die zuvor genannte Motorsteuerung integriert sein.

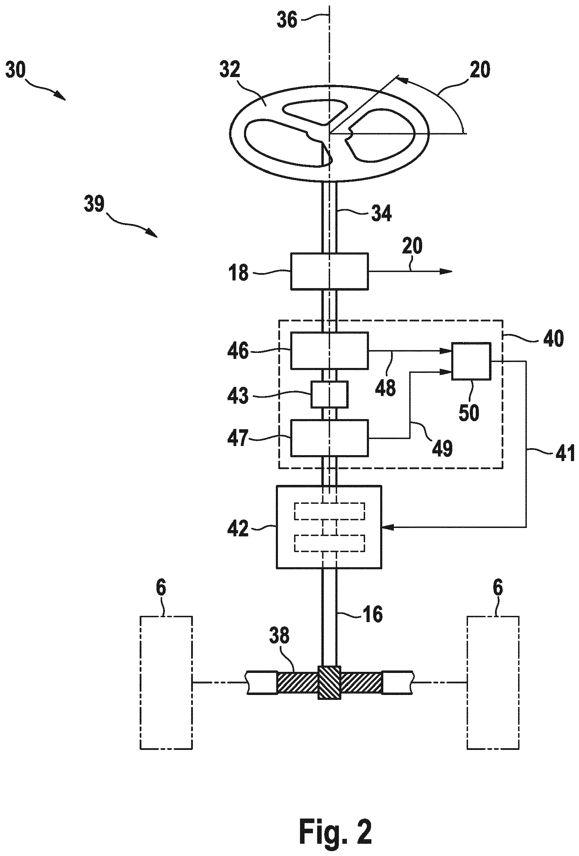

Es wird auf Fig. 2 Bezug genommen, die ein Lenksystem 30 für das Fahrzeug 2 der Fig. 1 zeigt.

Das Lenksystem 30 umfasst ein Lenkrad 32, das auf eine Welle 34 aufgesetzt ist, die wiederum um eine Rotationsachse 36 drehbar angeordnet ist. Das Lenkrad 32 ist somit eingerichtet, basierend auf einer Winkelstellung um die Rotationsachse 36 den oben genannten Lenkwinkel 20 zur Einstellung eines Lenkgetriebes 38 des Fahrzeuges 2 vorzugeben. Dazu wird das Lenkrad 32 beispielsweise von einem Fahrer des Fahrzeuges 2 gedreht.

Der Lenkwinkelsensor 18 ist im Rahmen der vorliegenden Ausführung in ein Sensorsystem 39 integriert, das neben dem Lenkwinkelsensor 18 zusätzlich einen Lenkmomentensensor 40 zur Erfassung eines Lenkmomentes 41 erfasst, das von einer Kraft abhängig ist, mit der die Lenkwelle 34 über das Lenkrad 32 gedreht wird. Der Lenkmomentsensor 40 kann auch als TQS für Torque Sensor bezeichnet werden. Auf die Erfassung dieses Lenkmomentes 40 wird an späterer Stelle näher eingegangen.

Die Einstellung des Lenkgetriebes 38 kann durch einen Elektromotor 42 unterstützt werden, der im Rahmen der vorliegenden Ausführung mit dem Lenkmoment 41 angesteuert wird. Zur Erfassung des Lenkmomentes 41 kann axial zwischen dem Lenkrad 32 und dem Elektromotor 42 ein Torsionselement 43 verbaut sein. Vom Lenkrad 32 aus gesehen kann dem Torsionselement 43 erster weiterer Winkelsensor 46 und nach dem Torsionselement 43 ein zweiter weiterer Winkelsensor 47 verbaut sein. Der erste und zweite weitere Winkelsensor 46, 47 erfassen entsprechend einen weiteren ersten Drehwinkel 48 der Lenkwelle 34 vor dem Torsionselement 43 und einen weiteren zweiten Drehwinkel 49 der Lenkwelle 34 nach dem Torsionselement 43 und geben diesen an eine Bestimmungseinrichtung 50 aus. Die Bestimmungseinrichtung 50 bestimmt dann basierend auf der Differenz zwischen dem weiteren ersten und zweiten Drehwinkel 48, 49 der Lenkwelle 34 sowie der Elastizität des Torsionselementes 43 in an sich bekannter Weise das oben genannte Lenkmoment 41.

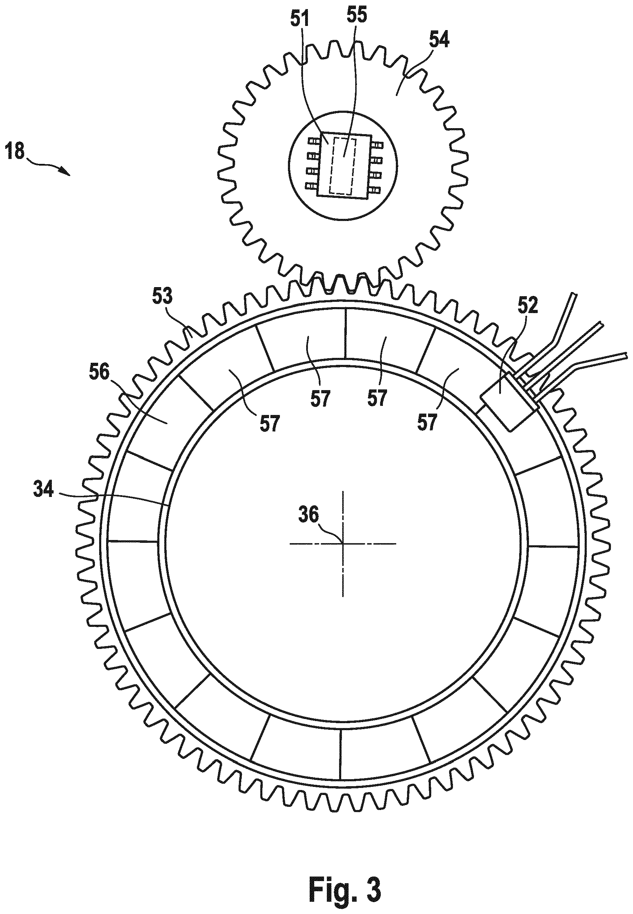

Das Sensorsystem 30 soll möglichst platzsparend in dem Fahrzeug 2 verbaut werden. Bevor darauf näher eingegangen wird, soll das Prinzip des Lenkwinkelsensors 18 anhand von Fig. 3 nachstehend näher erläutert werden.

Der Lenkwinkelsensor 18 soll den Lenkwinkel 20 über fünf Umdrehungen der Lenkwelle 34 erfassen, so dass der zu erfassende Lenkwinkel 20 ausgehend auf einer Ausgangsstellung der Lenkwelle 34, in der das Fahrzeug 2 geradeaus fährt, einen Messbereich zwischen ±1000° abdeckt.

Damit der Lenkwinkel 20 in einem Messbereich von größer 360° erfasst werden kann sind in dem Lenkwinkelsensor 18 der vorliegenden Ausführung ein erstes Sensorelement 51 und ein zweites Sensorelement 52 vorhanden. Mit einem der beiden Sensorelemente 51, 52 kann dabei die Lage der Lenkwelle 34 unterhalb von 360° erfasst werden, während mit dem anderen der beiden Sensorelemente 51, 52 bestimmt werden kann, in der wievielten Umdrehung sich die Lenkwelle 34 befindet.

Das erste Sensorelement 51 kann zum Zählen der Umdrehungen der Lenkwelle 34 verwendet werden. Hierzu ist das erste Sensorelement 51 gegenüber der Lenkwelle 34 ortsfest am Chassis 4 angeordnet. An der Lenkwelle 34 ist ein Antriebselement 53 mit einem ersten Zahnrades befestigt, das ein Abtriebselement 54 mit einem zweiten Zahnrades dreht.

Ein Übersetzungsverhältnis zwischen dem Antriebselement 53, also der Lenkwelle 34, und dem Abtriebselement 54 sollte derart gewählt werden, dass sich die Lenkwelle 34 und das Abtriebselement 54 nach einer bestimmten Anzahl von Umdrehungen der Lenkwelle 34 wieder in einer Ausgangslage befinden. Bei einem Übersetzungsverhältnis zwischen dem Abtriebselement 54 und der Lenkwelle 34 von 1,2 zu 1 würden sich das Abtriebselement 54 und die Lenkwelle 34 nach fünf Umdrehungen der Lenkwelle 34 wieder in ihrer Ausgangslage befinden. Das Abtriebselement 54 kann sich gegenüber der Lenkwelle 34 jedoch noch schneller drehen, beispielsweise mit einem Übersetzungsverhältnis von 2,22 zu 1.

Wird nun die Lenkwelle 34 innerhalb einer Umdrehung zwischen 0° und 360° in eine bestimmte Referenzlage von beispielsweise 0° gedreht, dann kann anhand der Lage des Abtriebselementes 54 bestimmt werden, in welcher Umdrehung sich die Lenkwelle 34 befindet. Hierzu ist ortsfest am Abtriebselement 54 ein Geberelement 55 in Form eines Gebermagneten angeordnet, der ein sich gegenüber dem ersten Sensorelement 51 drehendes erstes Gebermagnetfeld abstrahlen kann. Das erste Gebermagnetfeld durchdringt das erste Sensorelement 51, das dann wiederrum aus der Lage des ersten Gebermagnetfeldes die Lage des Abtriebselementes 54 bestimmen kann. Hierzu sollte das erste Sensorelement 51 zweckmäßigerweise als magnetisch sensitives Sensorelement, wie beispielsweise als Hall-Element ausgebildet sein.

Gegenüber dem ersten Sensorelement 51 kann das zweite Sensorelement 52 dazu verwendet werden innerhalb einer Umdrehung der Lenkwelle 34 von 0° bis 360° die Winkellage der Lenkwelle 34 zu bestimmen. Hierzu ist auch das zweite Sensorelement 52 gegenüber der Lenkwelle 34 ortsfest am Chassis 4 angeordnet. An der Lenkwelle 34 ist unmittelbar ein magnetischer Encoderring 56 ortsfest mit dieser befestigt, der eine Vielzahl von umlaufend um die Lenkwelle 34 angeordnete Magnetpole 57 umfasst, von denen in Fig. 3 der Übersichtlichkeit halber nicht alle mit einem Bezugszeichen versehen sind. Die einzelnen Magnetpole 57 bilden damit ein zweites Gebermagnetfeld.

Dreht sich die Lenkwelle 34 dreht sich mit dieser auch der Encoderring 56 und an dem ortsfest gegenüber der Lenkwelle 34 und damit dem Encoderring 56 befestigten zweiten Sensorelement 52 ziehen die Magnetpole 57 vorbei. Ist das zweite Sensorelement 52 so angeordnet, dass das zweite Gebermagnetfeld dieses durchdringen kann, kann die Bewegung des Gebermagnetfeldes erfasst werden. Hierzu sollte auch das zweite Sensorelement 52 zweckmäßigerweise als magnetisch sensitives Sensorelement, beispielsweise in Form eines Hall-Elementes ausgebildet sein.

Aus der Bewegung des Encoderringes 56 kann, beispielsweise durch Zählen der Änderungen der Magnetpoländerungen des zweiten Gebermagnetfeldes, die Lage der Lenkwelle 34 innerhalb von 0° und 360° abgeleitet werden.

Durch Zusammensetzen der Anzahl der oben genannten Anzahl der hinterlegten Umdrehungen der Lenkwelle 34 und der Lage der Lenkwelle 34 innerhalb von 0° und 360° kann dann der Lenkwinkel 20 innerhalb dem Lenkwinkelsensor 18 an- und aus dem Lenkwinkelsensor 18 ausgegeben werden.

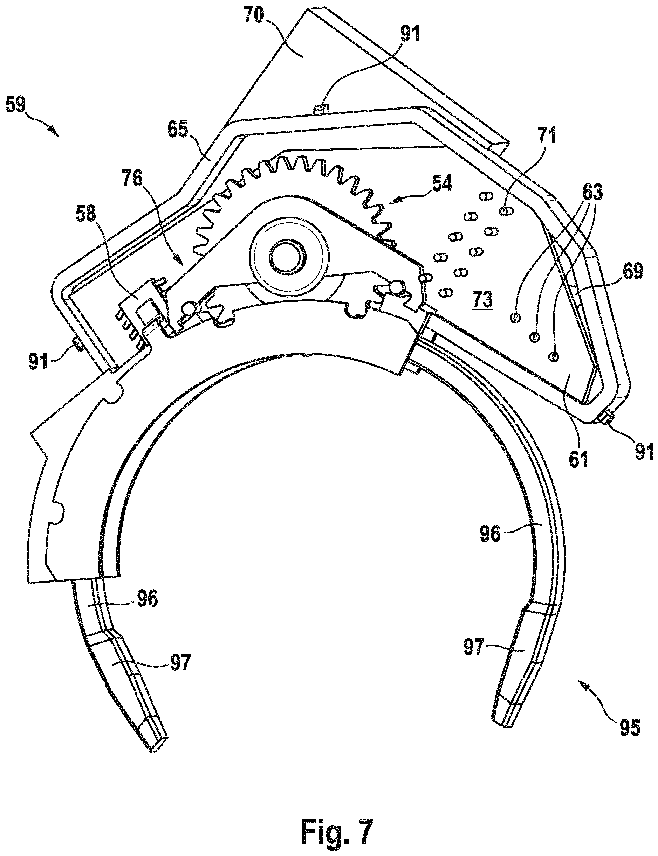

Die Sensorelemente 51, 52 werden gemeinsam mit einem dritten, noch zu beschreibenden Sensorelement 58 in einem in Fig. 7 dargestellten Messaufnehmer 59 für das Sensorsystem 39 verbaut.

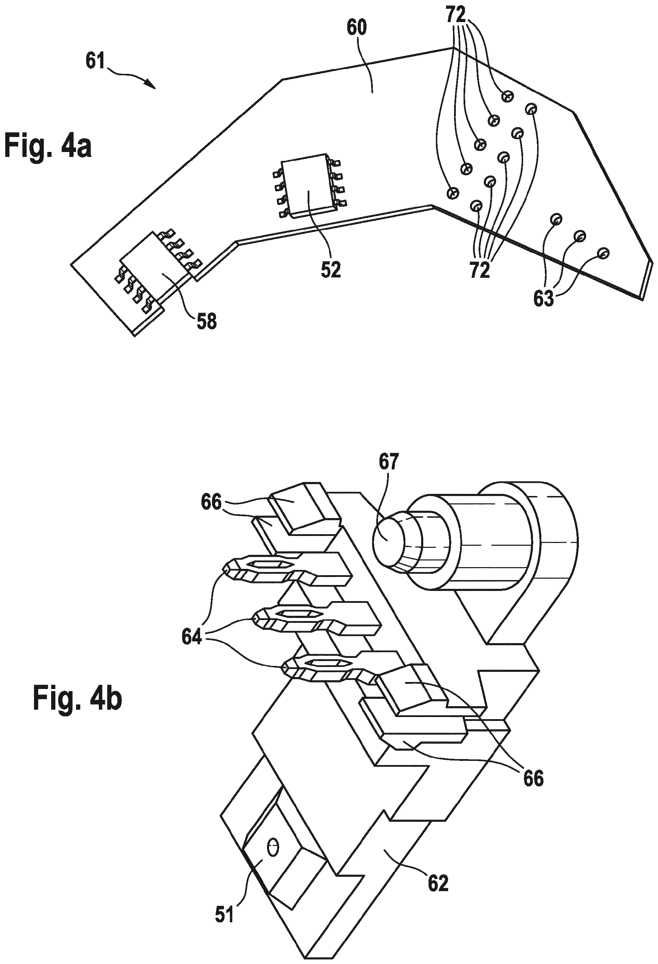

Hierzu wird zunächst auf einem in Fig. 4a gezeigten Schaltungsträger 60, beispielsweise in Form einer gedruckten Leiterplatte, ein Sensorschaltkreis 61 verschaltet. Der Sensorschaltkreis 61 umfasst dabei die drei zuvor genannten Sensorelemente, wobei das erste Sensorelement 51 auf einem getrennten, in Fig. 4b gezeigten Sensorträger 62 gehalten ist.

Der Schaltungsträger 60 umfasst dabei erste Kontaktierungsbohrungen 63, in die mit dem ersten Sensorelement 51 elektrisch verbundene Kontaktierungspins 64, sogenannte PressFit-Pins, zur elektrischen Anbindung des ersten Sensorelementes 51 an den Sensorschaltkreis 61 eingepresst werden können. Derartige PressFit-Pins sind beispielsweise aus der DE 10 2010 006 483 A1 bekannt.

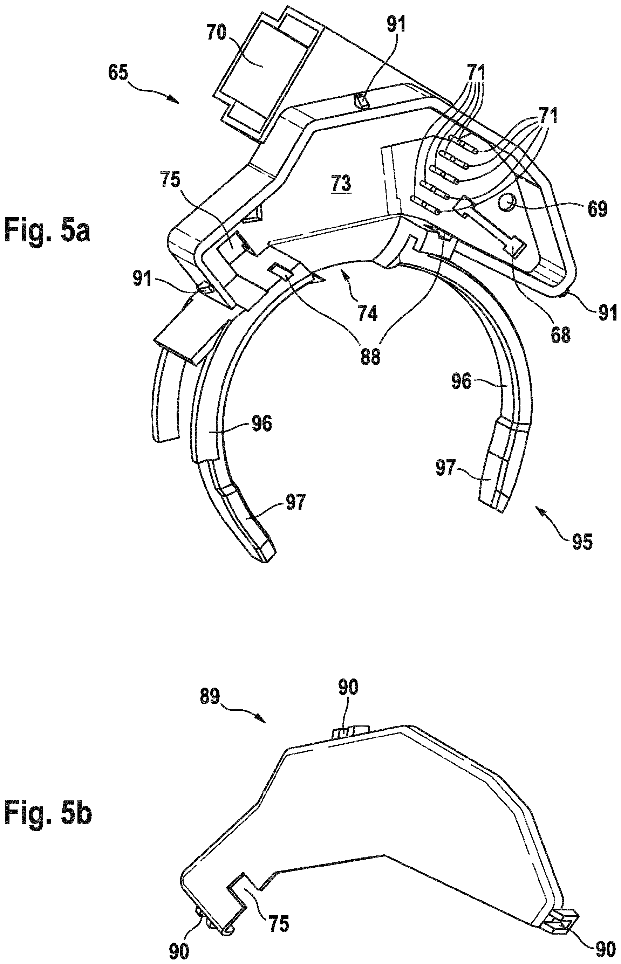

Der Schaltungsträger 60 und der Sensorträger 62 werden gemeinsam in einem in Fig. 5a dargestellten Gehäuse 65 aufgenommen. Hierzu sind am Sensorträger 62 Rastelemente 66 und ein Formschlusselement 67 ausgebildet, die entsprechend in eine Rastaufnahme 68 und in eine Formschlussöffnung 69 am Gehäuse 65 eingeführt werden können.

Das Gehäuse 65 weist ferner eine elektrische Steckeraufnahme 70 auf, in die Datenübertragungskabel eingesteckt werden kann, dass Sensordaten aus dem Sensorsystem 39 beispielsweise an den Regler 18 übertragen kann. Die elektrische Steckaufnahme 70 ist dabei elektrisch mit weiteren, am Gehäuse 65 mechanisch fest gehaltenen Kontaktierungspins 71 verbunden, die ebenfalls PressFit-Pins genannt werden. Diese weiteren Kontaktierungspins 71 können in zweite Kontaktierungsbohrungen 72 am Schaltungsträger 60 zur Kontaktierung mit diesem eingeführt werden.

Die Rastaufnahme 68, die Formschlussaufnahme 69 und die Kontaktierungspins 71 sind in einem Aufnahmeraum 73 am Gehäuse 65 angeordnet, in dem der Schaltungsträger 60 formschlüssig gehalten werden kann. Dieser Aufnahmeraum 65 weist ferner eine Abtriebselementöffnung 74 auf, durch die das Abtriebselement 54 in einer noch zu beschreibenden Weise geführt werden kann. Zusätzlich weist der Aufnahmeraum 73 auch eine Flussleitelementöffnung 75 auf, auf die an späterer Stelle näher eingegangen wird.

Vor dem Einsatz des Schaltungsträgers 60 in den Aufnahmeraum 73 wird zunächst der Sensorträger 62 am Gehäuse 65 befestigt. Hierzu werden die Kontaktierpins 64 über die die Rastaufnahme 68 von außen in den Aufnahmeraum 73 geführt, wobei die Rastelemente 66 in der Rastaufnahme 68 verrastet werden. Gleichzeitig wird das Formschlusselement 67 in die Formschlussaufnahme 69 eingeführt, was eine lagerichtige Ausrichtung des Sensorträgers 62 am Gehäuse 65 sicherstellt. Im Anschluss wird der Schaltungsträger 60 in den Aufnahmeraum 73 eingesetzt, wobei die Kontaktierungspins 64, 71 in den Kontaktierungsöffnungen 63, 72 zur elektrischen Anbindung des Schaltungsträgers 60 an die elektrische Steckeraufnahme 70 und an das erste Sensorelement 51 verpresst werden. Die elektrische Verbindung mittels PressFit-Pins ist dabei jedoch nur beispielhaft zu sehen und kann beliebig beispielsweise mittels Löten, Kleben, etc. realisiert werden.

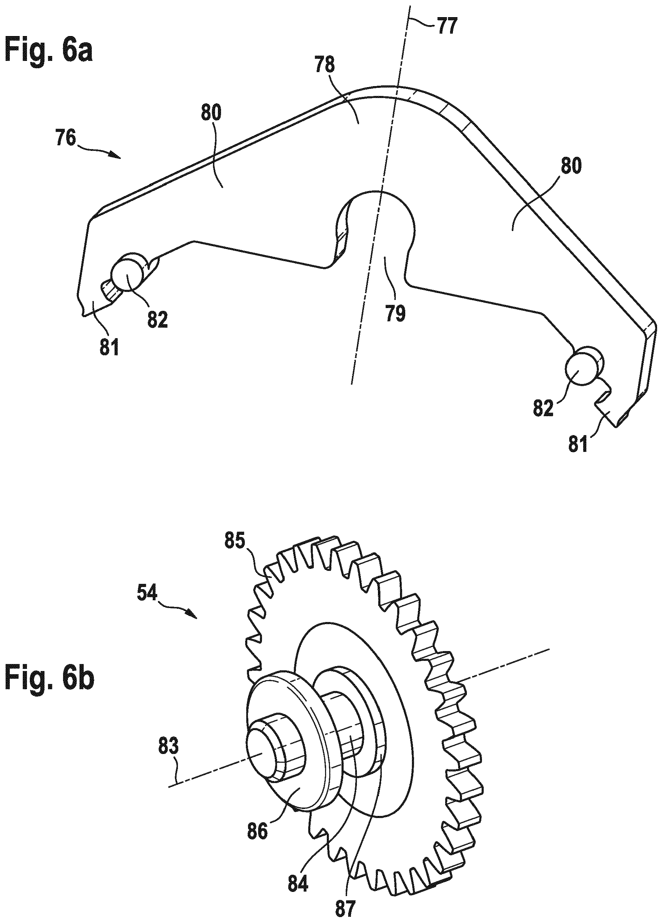

Im Anschluss wird das Abtriebselement 54 über ein in Fig. 6a gezeigtes Klemmelement 76 in den Aufnahmeraum 73 eingesetzt. Das Klemmelement 76 weist einen zu einer Spiegelachse 77 achsensymmetrisch ausgebildeten Grundkörper 78 auf in dem ein Lagerabschnitt 79 ausgebildet ist, in dem das Abtriebselement 54 drehbar gelagert werden kann. Durch diesen Lagerabschnitt 79 verläuft die Spiegelachse 77. Vom Lagerabschnitt 79 und von der Spiegelachse 77 ragen schwalbenschwanzförmig zwei Befestigungsabschnitte 80 ab, an deren Enden je ein Formschlussfuß 81 und ein Formschlusspin 82 ausgebildet sind.

Zum drehbaren Lagern des Abtriebselementes 54 am Klemmelement 76 weist das Abtriebselement 54 eine um eine Rotationsachse 83 drehbare Trägerwelle 84 auf, an deren einen axialen Ende ein Zahnrad 85 ausgebildet ist. Am dem Zahnrad 85 gegenüberliegenden axialen Ende der Trägerwelle 84 ist ein Axiallager 86 ausgebildet, um das Abtriebselement 54 am Klemmelement 76 auch axial lagern zu können. Damit der Zahnrad 85 nicht am Klemmelement 76 schleift, kann am Zahnrad 85 noch ein axialer Abstandshalter 87 ausgebildet sein.

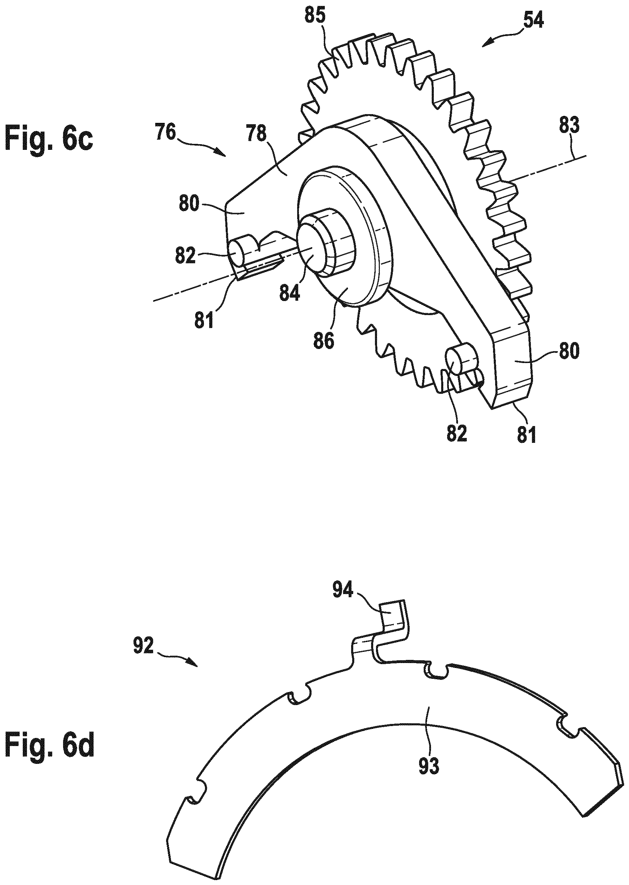

Um das Abtriebselement 54 nun in den Aufnahmeraum 73 des Gehäuses 65 einzusetzen, wird das Abtriebselement 54, wie in Fig. 6c gezeigt, zunächst mit seiner Trägerwelle 84 in den Lagerabschnitt 79 des Klemmelementes 78 eingesetzt. Um das Klemmelement 76 im Aufnahmeraum 73 zu halten, sind am Gehäuse 65 in Fig. 5a dargestellte Fußaufnahmen 88 ausgebildet, in die die Formschlussfüße 81 am Klemmelement 76 formschlüssig eingesetzt werden können. In dem so in den Aufnahmraum 73 eingesetzten Zustand des Abtriebselementes 54 ragt der Zahnradabschnitt 85 über die Abtriebselementöffnung 74 nun aus dem Aufnahmeraum 73 heraus.

Abschließend kann der Aufnahmeraum 73 mit einem in Fig. 5b dargestellten Deckel 89 verschlossen werden. Der Deckel 89 weist hierzu Rastösen 90 auf, in denen am Gehäuse 65 ausgebildete Rastnasen 91 verrasten können, um den Deckel 89 sicher am Gehäuse 65 zu halten. Ferner weist auch der Deckel 89 eine Flussleitelementöffnung 75 auf.

Abschließend werden nun Flussleitelemente 92 an dem herzustellenden Messaufnehmer 59 befestigt, von denen eines beispielhaft in Fig. 6d dargestellt ist. Die Flussleitbleche 92 weisen ein Flusssammelblech 93 und einen vom Flusssammelblech 93 abragenden Flussleitfuß 94 auf. Dabei kann der Flussleitfuß 94 am Sensorschaltkreis 61, beispielsweise am dritten Sensorelement 58 befestigt werden. Die Flussleitbleche 92 sowie das dritte Sensorelement 58 werden zur Erfassung des Lenkmoments 41 verwendet, worauf an späterer Stelle näher eingegangen wird.

In Fig. 7 ist der zusammengesetzte Messaufnehmer 59, der Übersichtlichkeit halber ohne den Deckel 89 und ohne den Sensorträger 62 dargestellt.

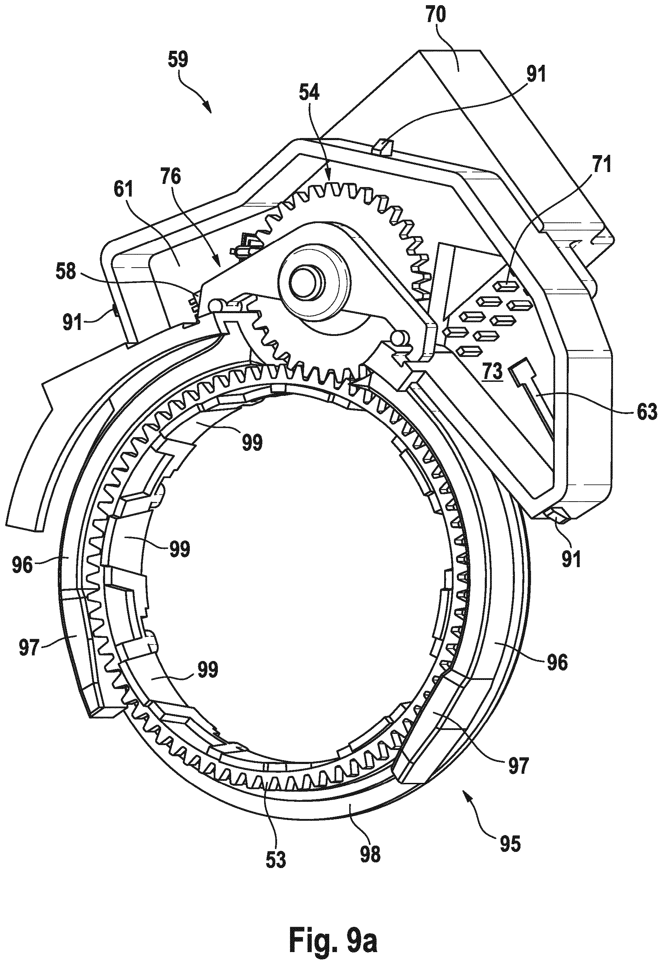

Damit das Antriebselement 53 das Abtriebselement 54 basierend auf einer Drehung der Lenkwelle 34 drehen kann wird der Messaufnehmer 59 mit dem Antriebselement 53 verbunden. Hierzu ragen am Gehäuse 65 von der Abtriebselementöffnung 74 zwei ein Klammerelement 95 bildende Schenkel 96 ab. Diese Schenkel weisen an ihrem, dem Gehäuse 65 gegenüberliegenden Enden eine Verdickung 97 auf. Die Schenkel 96 sind bogenförmig ausgeführt. Zum Verbinden des Messaufnehmers 59 mit dem Antriebselement 53 werden die bogenförmig ausgeführten Schenkel 96, wie in Fig. 9a gezeigt, um das Antriebselement 53 gelegt, so dass das Klammerelement 95 das Antriebselement 53 einklammert. Durch dieses Klammern wird das Antriebselement 53 gegen das Abtriebselement 54 gedrückt, so dass das Antriebselement 53 und das Abtriebselement 54 ineinandergreifen und der Messaufnehmer 59 an drei Punkten auf dem Antriebselement 53 gelagert ist. Durch die Klammerung ist eine elastische Verspannung zwischen dem Antriebselement 53 und dem Abtriebselement 54 gegeben, aufgrund derer das Antriebselement 53 stets spielfrei gegen das Abtriebselement 54 gedrückt wird, unabhängig von äußeren Einflüssen, wie beispielsweise Wärmebewegungen der einzelnen Bauteile.

Im Rahmen der vorliegenden Ausführung ist das Antriebselement 53 radial um ein Leitblechträgerelement 44 gelegt. Axial vor und hinter dem Leitblechträgerelement 44 sind Kränze 98 mit sich axial erstreckenden Zähnen 99 derart angeordnet, dass die Zähne 99 des einen Kranzes 98 in Umfangsrichtung gesehen zwischen die Zähne 99 des anderen Kranzes 98 greifen greifen. Dabei sind die Kränze 98 am Leitblechträgerelement 44 befestigt.

Um mit dem Torsionselement 43 das Lenkmoment 41 zu erfassen, wird die Lenkwelle 34 in zwei Lenkwellenabschnitte 34a, 34b unterteilt, die über das nicht dargestellte Torsionselement 43 miteinander verbunden werden. Auf diese Weise kann das Leitblechträgerelement 44 durch das Anlegen des Lenkmomentes 41 an die Lenkwelle 34 gegenüber dem Encoder 56 tordiert werden. Dabei werden die beiden Kränze 98 relativ zum Encoder 56 verdreht, wodurch sich die Zähne 99 der beiden Kränze 98 gegenüber den Polen des Encoders 56 relativ zueinander bewegen. Wird nun der Encoderring 56 radial innerhalb der Kränze 98 und radial unterhalb der Zähne 99 angeordnet, und werden die Kränze 98 mit den Zähnen 99 aus einem magnetisch leitfähigen Material ausgebildet, dann in Abhängigkeit der relativen Lage der Zähne 99 der Kränze 98 in Umfangsrichtung zueinander und damit in Abhängigkeit des Lenkmomentes 41 ein magnetischer Fluss in den Kränzen 98 gesammelt.

Die Kränze 98 werden dabei beim Aufsetzen des Messaufnehmers 59 auf das Antriebselement 53 schleifkontaktartig mit den Flussleitelementen 92 kontaktiert. Auf diese Weise können sich die Kränze 98 gegenüber den Flussleitelementen 92 drehen, aber besitzen aber dennoch einen magnetisch leitfähigen Kontakt zu diesen. Der oben genannte, in den Kränzen 98 gesammelte magnetische Fluss kann nun über die Flussleitfüße 94 zum dritten Sensorelement 58 geleitet werden, das dann den vom Lenkmoment 41 abhängigen magnetischen Fluss erfassen und direkt ein entsprechendes vom Lenkmoment 41 abhängiges Signal ausgeben kann. Zweckmäßigerweise sollte das dritte Sensorelement 58 in der vorliegenden Ausführung daher ebenfalls als magnetisch sensitives Sensorelement, wie ein Hall-Element ausgebildet sein.

Das Prinzip der zuvor beschriebenen Erfassung des Lenkmomentes 41 wird auch als Moving Magnet Technologie, kurz MMT bezeichnet und ist beispielsweise in der DE 198 34 322 A1 näher erläutert, worauf der Kürze halber verwiesen wird.

Der große Vorteil der vorliegenden Ausführung ist, dass nur ein einziger magnetischer Encoder 56 zum Erfassen des Lenkmomentes 41 notwendig ist, wobei dieser magnetische Encoder 56 gleichzeitig auch zum Erfassen der Winkellage der Lenkwelle 34 verwendet werden kann.

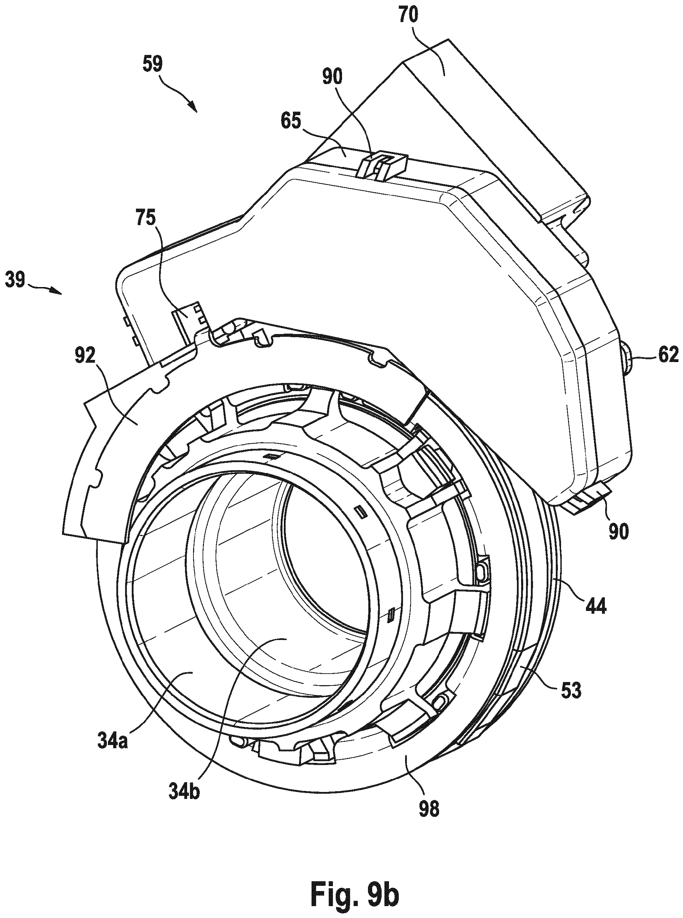

In Fig. 9b ist das gesamte Sensorsystem 39 nach dem Aufsetzen des Messaufnehmers 59 auf das Antriebselement 53 perspektivisch dargestellt.

## Patentansprüche

1. Sensor (18) zum Erfassen eines Drehwinkels (20) einer Welle (34) in einem Fahrzeug (2) umfassend ein Getriebe mit einem ortsfest an der Welle (34) positionierbaren Antriebselement (53) und einem Abtriebselement (54), an dem ortsfest ein Geberelement (55) zum Abgeben eines vom Drehwinkel (20) abhängigen Geberfeldes angeordnet ist, wobei das Antriebselement (53) und das Abtriebselement (54) über ein Klammerelement (95) elastisch gegeneinander verspannt sind, wobei das Abtriebselement (54) am Klammerelement (95) gelagert ist, und das Klammerelement (95) das Antriebselement (53) umgreift, **dadurch gekennzeichnet, dass** das Klammerelement (95) zwei das Antriebselement (53) umgreifende Schenkel (96) aufweist, die an Ihren Enden (97) wenigstens zum Antriebselement (53) hin verdickt ausgebildet sind.

2. Sensor (18) nach Anspruch 1, wobei das Klammerelement (95) ein Gehäuse (65) umfasst, in dem das Abtriebselement (54) aufgenommen ist.

3. Sensor (18) nach Anspruch 2, wobei das Abtriebselement (54) mit dem Gehäuse (65) über ein Klemmelement (76) verbunden ist.

4. Sensor (18) nach Anspruch 3, wobei das Klemmelement (76) einen das Abtriebselement (54) lagernden Lagerabschnitt (79) und zwei vom Lagerabschnitt (79) abgragende Befestigungsabschnitte (80) aufweist, über den der Lagerabschnitt (79) am Gehäuse (65) befestigt ist.

5. Sensor (18) nach Anspruch 4, wobei die Befestigungsabschnitte (80) achsensymmetrisch zu einer durch den Lagerabschnitt (79) verlaufenden Achse (77) angeordnet sind.

6. Sensor (18) nach Anspruch 4 oder 5, wobei die Lagerabschnitte (80) formschlüssig mit dem Gehäuse (65) verbunden sind.

## Claims

1. Sensor (18) for detecting a rotation angle (20) of a shaft (34) in a vehicle (2) comprising a gear mechanism with a drive element (53) which can be positioned in a stationary manner on the shaft (34) and with an output element (54) on which a transmitter element (55), for outputting a transmitter field which is dependent on the rotation angle (20), is arranged in a stationary manner, wherein the drive element (53) and the output element (54) are braced against one another in an elastic manner by means of a clip element (95), wherein the output element (54) is mounted on the clip element (95), and the clip element (95) engages around the drive element (53), **characterized in that** the clip element (95) has two limbs (96) which engage around the drive element (53) and, at their ends (97), are of thickened design at least in the direction of the drive element (53).

2. Sensor (18) according to Claim 1, wherein the clip element (95) comprises a housing (65) in which the output element (54) is accommodated.

3. Sensor (18) according to Claim 2, wherein the output element (54) is connected to the housing (65) by means of a clamping element (76).

4. Sensor (18) according to Claim 3, wherein the clamping element (76) has a bearing section (79), which supports the output element (54), and two fastening sections (80) which protrude from the bearing section (79) and by means of which the bearing section (79) is fastened to the housing (65).

5. Sensor (18) according to Claim 4, wherein the fastening sections (80) are arranged with axial symmetry with respect to an axis (77) which runs through the bearing section (79).

6. Sensor (18) according to Claim 4 or 5, wherein the bearing sections (80) are connected to the housing (65) in an interlocking manner.

## Revendications

1. Capteur (18) pour détecter un angle de rotation (20) d'un arbre (34) dans un véhicule (2) comprenant une transmission qui présente un élément d'entraînement d'entrée (53) qui peut être positionné de manière fixe sur l'arbre (34) et un élément d'entraînement de sortie (54) sur lequel est disposé de manière fixe un élément de détection (55) destiné à délivrer un champ de détection dépendant de l'angle de rotation (20), dans lequel l'élément d'entraînement d'entrée (53) et l'élément d'entraînement de sortie (54) sont soumis à une sollicitation élastique l'un vers l'autre par un élément de serrage (95), dans lequel l'élément d'entraînement de sortie (54) est monté sur l'élément de serrage (95), et l'élément de serrage (95) s'engage autour de l'élément d'entraînement d'entrée (53),
**caractérisé en ce que** l'élément de serrage (95) comporte deux branches (96) qui s'engagent autour de l'élément d'entraînement d'entrée (53) et sont épaissies à leurs extrémités (97) au moins vers l'élément d'entraînement d'entrée (53).

2. Capteur (18) selon la revendication 1,
dans lequel l'élément de serrage (95) comprend un boîtier (65) dans lequel est logé l'élément d'entraînement de sortie (54).

3. Capteur (18) selon la revendication 2,
dans lequel l'élément d'entraînement de sortie (54) est relié au boîtier (65) par l'intermédiaire d'un élément de serrage (76).

4. Capteur (18) selon la revendication 3,
dans lequel l'élément de serrage (76) présente une partie formant palier (79) supportant l'élément d'entraînement de sortie (54) et deux parties de fixation (80) dépassant de la partie formant palier (79), par l'intermédiaire desquelles la partie formant palier (79) est fixée au boîtier (65).

5. Capteur (18) selon la revendication 4
dans lequel les parties de fixation (80) sont disposées de manière symétrique axialement par rapport à un axe (77) passant à travers la partie de palier (79).

6. Capteur (18) selon la revendication 4 ou 5,
dans lequel les parties de palier (80) sont reliées par complémentarité de forme au boîtier (65).
